# EUROPEAN PATENT APPLICATION

(11) **EP 1 596 591 A2**
(43) Date of publication of application: **16.11.2005**
(21) Application number: 05010210.2
(22) Date of filing: 11.05.2005
(51) Int. Cl.: H04N 5/761

(54) **Recording apparatus, recording reservation system, article management system, recording method, and computer program**

(30) Priority: 13.05.2004 JP 2004143168
(71) Applicant: SONY CORPORATION, Tokyo 141 (JP)
(72) Inventor: Kaneko, Jun, Shinagawa-ku Tokyo (JP); Yamamoto, Tomoyuki, Shinagawa-ku Tokyo (JP); Sumiyoshi, Kazuhito, Shinagawa-ku Tokyo (JP); Minami, Setsushi, Shinagawa-ku Tokyo (JP); Aoki, Shunsuke, Shinagawa-ku Tokyo (JP)
(74) Representative: Melzer, Wolfgang

(57) **Abstract**

The present invention provides a recording apparatus (600), for recording a broadcast program to be received, including a data input unit (610), an article information analyzing unit (622), and a recording control unit (621). The data input unit (610) acquires article information concerning a broadcast program and with an article identifier set to the information. The article information analyzing unit (622) generates a recording reservation list with an article identifier for the article information set as registered information, stores the recording reservation list in a storage unit (632), inputs a broadcasting date and time information related to an article identifier set in the recording reservation list into the data input unit, and registers the acquired broadcasting date and time information stored in the storage unit (632). The recording control unit (621) executes recording based on the broadcasting date and time information set in the recording reservation list stored in the storage unit (632).

## Description

### CROSS REFERENCE TO RELATED APPLICATIONS

The present invention contains subject matter related to Japanese Patent Application JP 2004-143168 filed in the Japanese Patent Office on May 13, 2004, the entire contents of which being incorporated herein by reference.

### BACKGROUND OF THE INVENTION

The present invention relates to a recording apparatus, a recording reservation system, an article management system, and a recording method as well as a computer program for recording contents of a program broadcasted by a broadcast station.

More specifically, the present invention relates to a recording apparatus, a recording reservation system, an article management system, and a recording method as well as a computer program for enabling recording reservation of broadcast contents before a broadcasting date and time are fixed.

Rapid progress in digital technology has made it possible to store large quantities of audio and video (AV) data without deterioration over time. In these days, a recording medium such as an HDD or a DVD having many dozens of GB storage capacity has become relatively inexpensive, and a recording apparatus with an HDD base or a DVD base is also available in the market. In connection with realization of a large capacity of those recording media, it is possible to record and accumulate the number of programs in a recording apparatus.

In association with realization of a large capacity of recording media for recording and accumulating the number of programs, the problem has occurred that a workload to a user is increased for choosing a program to be recorded and reserving recording of the program. In order to reduce such a workload to the user, a system for storing and accumulating information concerning use's preference or profile, and automatically recording and reserving a program based on those information has been developed.

An automatic reservation processing is executed, for instance, based on an EPG (Electric Program Guide) sent from a broadcast station or the like. The EPG (Electric Program Guide) includes attribute information corresponding to broadcast contents such as a broadcasting date and time, a broadcast channel, casting information and a program outline on each broadcast contents. The recording apparatus receives an EPG (Electronic Program Guide), verifies the EPG to user's preference or profile information stored in a storage area and automatically chooses contents to be reserved. The automatic recording reservation processing based on the EPG and the preference information is disclosed in the Patent Document 1.

A user's device having received the EPG (Electronic Program Guide) can display contents information included in the EPG such as, for instance, casting information and a program outline on a display, and thereby the user can obtain outline of contents for a scheduled program.

However, because an EPG (Electronic Program Guide) corresponding to broadcast contents is sent after a broadcasting date of contents is determined by a broadcast station, a user can obtain only contents information having a fixed broadcasting date and time. Besides, recording is reserved based on an EPG on the condition that channel information and broadcasting date and time information are set in the EPG, and therefore contents with the broadcasting date and time not fixed nor recorded in the EPG can not be recorded.

### [Patent Document 1]

Japanese Patent Laid-open No. 2002-24862

### SUMMARY OF THE INVENTION

The present invention was made in view of the foregoing, and it is desirable to provide a recording apparatus, a recording reservation system, an article management system, a recording method, and a computer program. The present invention enables the device, the systems, the methods, and the program to acquire contents before an EPG (Electronic Program Guide) is distributed, namely, various types of information relating to a broadcast program with a broadcasting date and time not fixed yet and also to make a reservation for recording based on the acquired information.

According to an embodiment of the presenting invention, there is provided a recording apparatus for recording a broadcast program to be received including:
a data receiving device for acquiring article information concerning a broadcast program and with an article identifier set to the information;
an article information analyzing device for generating a recording reservation list with an article identifier for the article information set as registered information, storing the recording reservation list in a storage device, inputting a broadcasting date and time information related to an article identifier set in the recording reservation list into the data input device, and registering the acquired broadcasting date and time information stored in the storage device; and
a recording control device for executing recording based on the broadcasting date and time information set in the recording reservation list stored in the storage device.

According to an embodiment of the presenting invention, there is provided a recording reservation system including:
a program management system stored program management information related to a program identifier to be broadcasted;
an article management system stored article information, which corresponds to a program identifiable with the program identifier, related to an article identifier; and
a recording apparatus capable of selecting an object to be recorded based on article information acquired from the article management system, generating a recording reservation list with the article identifier set and generating the recording reservation in a storage device, acquiring broadcasting date and time information for a program corresponding to an article corresponding to an article identifier registered in the recording reservation list, additionally writing the broadcasting date and time information in the recording reservation list, and recording based on the broadcasting date and time information set in the recording reservation list.

According to an embodiment of the presenting invention, there is provided a article information management system for storing and managing article information relating to a program to be broadcasted including:
a database recorded article information and a program identifier related to an article identifier as an identifier for article information relating to a program to be broadcasted as article management information;
data communication means for executing data communication with a program management system with program management information related to a program identifier stored and a recording apparatus;
data processing means for receiving broadcasting date and time information for a program corresponding to article management information stored in the database from the program management system, recording the broadcasting date and time information in corresponding article management information, and presenting the article management information to the recording apparatus in response to a request for access from the recording apparatus.

According to an embodiment of the presenting invention, there is provided a recording method of recording a broadcast program to be received including the steps of:
inputting data for acquiring article information relating to the broadcast program to be received and with an article identifier set to the information;
analyzing the article information for generating a recording reservation list with an article identifier for the article information set as registered information, storing the recording reservation list in a storage device, inputting broadcasting date and time information related to the article identifier set in the recording reservation list, and registering the acquiring broadcasting date and time information on the recording reservation list stored in the storage device; and
recording based on the broadcasting date and time information set in the recording reservation list stored in the storage device.

According to an embodiment of the presenting invention, there is provided a computer program for making a computer executed the method of recording a broadcast program to be received, the method including the step of:
inputting data for acquiring article information relating to the broadcast program to be received and with an article identifier set to the information;
analyzing the article information for generating a recording reservation list with an article identifier for the article information set as registered information, storing the recording reservation list in a storage device inputting broadcasting date and time information related to the article identifier set in the recording reservation list, and registering the acquiring broadcasting date and time information on the recording reservation list stored in the storage device; and
recording based on the broadcasting date and time information set in the recording reservation list stored in the storage device.

The computer program according to the present invention can be provided to a computer system capable of executing various types of program code with a storage medium, a communication medium, a recording medium such as a CD, FD, and an MO providing various program codes in the computer readable form, or through a communication network. When the program is provided in the computer-readable form, the computer system can realize a process corresponding to the supplied program.

Other objects, features or advantages of the present invention will be disclosed by the detailed descriptions based on the examples or the accompanied drawings as described later. The term of "system" as used herein indicates a collection of logical groups for a plurality of devices, and the components devices are not always required to be provided within one housing.

With the configuration according the present invention, an article related to a broadcast program is acquired, a recording reservation is executed by setting a recording list storing an article identifier corresponding to an article, then the fixed broadcasting date and time information is added to the recording list, and further a recording is executed based on the broadcasting date and time added to the list. Therefore, for instance, a reservation can be made for recording concerning contents in advance before EPG (Electronic Program Guide) is sent to, namely a broadcast program that a broadcasting date and time are not fixed.

Besides, with the configuration of the present invention, either an article provided by persons concerned to a broadcast program or information provided by general viewers can be applicable. In that case, a recording reservation list with article identifier as registered information related to an article provided by persons concerned to a broadcast program or information provided by general viewers is generated, then the fixed broadcasting date and time are added to the recording list, and a recording is executed based on the broadcasting date and time information added to the list.

### BRIEF DESCRIPTION OF THE DRAWINGS

Fig. 1 is a view illustrating configuration of a recording apparatus according to an embodiment of the present invention;
Fig. 2 is a view illustrating configuration for management of various types of information associated with the production of a program that may be recorded by the recording apparatus according to an embodiment of the present invention;
Fig. 3 is a view illustrating program management information for management of the program management system;
Fig. 4 is a view illustrating article management information managing an article management system and a sending process of an article identifier to a program management system;
Fig. 5 is a view illustrating a processing sequence up to recording with the recording apparatus according to an embodiment of the present invention;
Fig. 6 is a view illustrating a process of acquiring an article from an article management system according to the recording apparatus of an embodiment of the present invention;
Fig. 7 is a view illustrating a process of registering a recording reservation list with the recording apparatus according to an embodiment of the present invention;
Fig. 8 is a view illustrating a process of storing information concerning the broadcasting date and time in the recording reservation list created by a recording apparatus according to an embodiment of the present invention;
Fig. 9 is a block diagram illustrating functions of the recording apparatus according to an embodiment of the present invention;
Fig. 10 is a sequence diagram illustrating a sequence of processes up to recording process with the recording apparatus according to an embodiment of the present invention;
Fig. 11 is a view illustrating one example of a process sequence according to an embodiment of the present invention;
Fig. 12 is a view illustrating one example of a process sequence according to an embodiment of the present invention; and
Fig. 13 is a view illustrating one embodiment in which an article managed by an article management system is acquired based on a license.

### DETAILED DESCRIPTION OF THE PREFERRED EMBODIMENTS

A recording apparatus, a recording reservation system, an article management system, a recording method and a computer program each according to the present invention will be described in detail below with reference to the drawings.

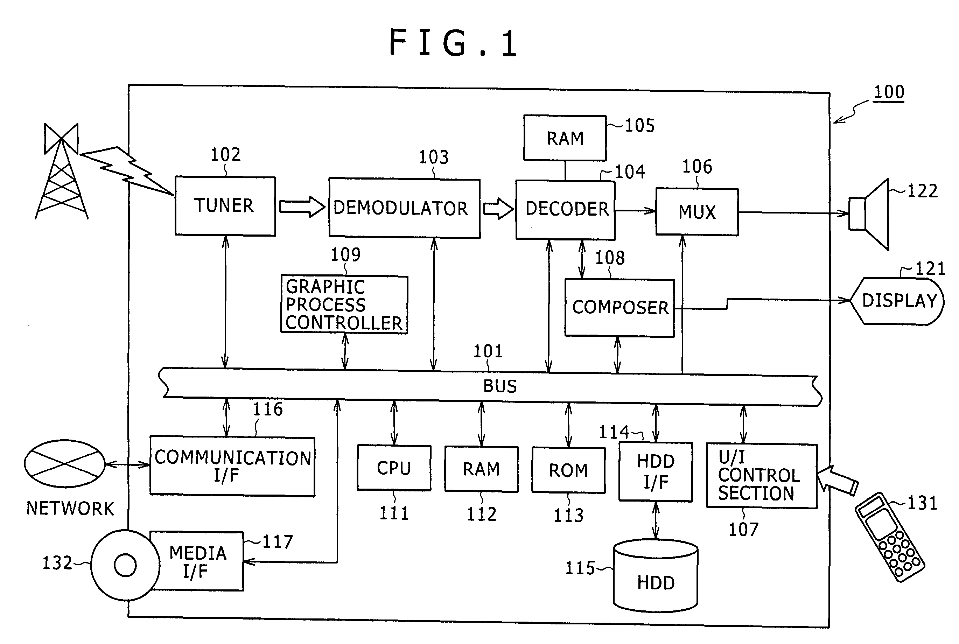

Configuration of a hardware of recording apparatus 100 according to the present invention is explained below with reference to Fig. 1.

The recording apparatus 100 according to the present invention records a broadcast program (broadcast contents) broadcasted hour by hour from each broadcast station. The recording apparatus 100 also provides search and presentation services of contents for recording to users if required. The recording apparatus 100 can be incorporated as an AV device, and, for instance, can be integrated with a TV receiving set such as a set top box (STB).

In the recording apparatus 100, a CPU (Central Processing Unit) 111 as a main controller is interconnected to each hardware component via a bus 101, and provides overall controls to each component. Each component of the recording apparatus 100 is described hereinafter.

Broadcast wave received by an antenna (not shown) is provided to a tuner 102. The broadcast wave has a prescribed format and may include, for instance, an EPG (electric program guide). Any wave, such as surface wave, satellite wave, wired or wireless is acceptable as an broadcast wave.

The tuner 102 tunes a broadcast wave of designated channel, namely selects a channel according to an instruction from the CPU 111, and sends the received data to a subsequent demodulator 103. The demodulator 103 demodulates the modulated received data. Configuration of the tuner 102 may be changed or expanded, if necessary, according to whether the transmitted broadcast wave is analog or digital.

In case of digital satellite broadcast, digital data received and demodulated from broadcast wave is "transport stream" in which AV data compressed by adopting MPEG2 (Moving Picture Experts Group 2) method and data for broadcast data are multiplexed. The former AV data is image and sound information including broadcast contents. The latter data for broadcast data is data associated with the broadcast program, and includes, for instance, an EPG (Electric Program Guide). The transport stream is regulated by a "transport layer" as defined in relation to the OSI (Open Systems Interconnection) reference model.

A decoder 104 decodes the transport stream and separates the transport stream into MPEG2-compressed AV data and data for data broadcasting. Further, the decoder 104 separates MPEG2-compressed real time AV data into compressed video data and compressed audio data. Then, the video data is subjected to MPEG2 extension processing to regenerate the original video signals, and the audio data is subjected to PCM (Pulse Code Modulation) decoding and is synthesized with additional sounds to produce a reproduced audio signal. The decoder 104 may be provided with a memory 105 for storing work data in a local memory thereof. The reproduced video signal is displayed on a display 121 via a composer 108, and the reproduced audio signal is outputted from a speaker 122 via a mixer 106.

The decoder 104 transfers the data for data broadcasting separated from the transport stream to the CPU 111 via the bus 101. The CPU 111 is processed by a prespecified application and can be used, for instance, for creating an EPG screen.

Further the decoder 104 can transfer the MPEG2 stream before subjected extension processing to other equipments (such as the HDD 115) via the bus 101 on in response to a demand of the CPU 111 to the CPU 111.

A user interface control section 107 is a module of processing an input from a user, and is provided with operation buttons/switches (not shown) or a device allowing for a remote operation with a remote controller 131 via infrared ray (IR). The user interface control section 107 may further include a display panel or a LED indicator to display currently set-up contents.

The CPU 111 is a main controller for controlling all operations of the recording apparatus 100, and for instance the CPU 111 can execute various types of applications on a platform provided by an operating system (OS).

A RAM (Random Access Memory) 112 is a writable volatile memory for loading an execution program code of the CPU 111 or for writing work data of the execution program. A ROM (Read Only Memory) 113 is a read-only memory for storing permanently therein a self-diagnostic program, an initializing program executed when power to the recording apparatus 100 is turned ON, and a control code for hardware operations.

A communication interface 116 is connected to various types of networks such as a LAN or the Internet, and has a structure which allows for communications with enables various types of devices connected through a LAN and a server connected to outside networks.

A hard disc device (HDD) 115 is a random-accessible external memory device enabling accumulation of programs and data as files file with a prespecified format, and has a large capacity such as, for instance, many dozens of GB (or more than 100 GB). A memory space on the hard disc is controlled, for instance, by a operating system.

The HDD 115 is connected to the bus 101 via a hard disc interface 114. In this embodiment, the hard disc device 115 can be used as a domain for recording broadcast program contents therein and also can be used as a domain for storing therein the EPG (electronic program guide) information. Moreover, the hard disc device 115 is utilized as a domain for storing various types of information such as program information or article information as described hereinafter. An external memory device with a large capacity available for carrying out the present invention is not limited to a hard disc, and a recording medium 132 such as a DVD capable of access via such as a media interface 117 may also be used. It is preferable that the recording medium is random-accessible.

The CPU 111 can execute various types of applications under control by an operating system. For instance, the CPU 111 issues a command for recording and for reproducing the contents in response to a user command via the remote control 131 or the U/I controlling device 107 (or may always perform recording regardless of whether a user command is inputted or not).

The MPEG2 stream before subjected to the extension processing is transferred from the decoder 104 to the HDD 115 according to a command from the CPU 111. Any method such as PIO (program IO) method or DMA (Direct Memory Access) method may be used for data transfer. Broadcast contents is stored in the HDD 115 for each virtual channel in time sequence.

When reproducing recorded contents, the MPEG2 stream received from the HDD 115 is transferred to the decoder 104 via the bus 101 according to a command from the CPU 111. The decoder 104 separates the received data into compressed video data and compressed audio data simultaneously when the data is received, and converts these data to the original state by MPEG2 extension processing for reproduction.

In addition to recording broadcast contents and reproduction of the contents, the CPU 111 executes the following processes:
(1) Analysis of the EPG in which, for instance, an EPG (electric program guide) written in the data for data broadcasting received together broadcast contents is acquired and analyzed.
(2) Generation of a recording reservation list based on article information which acquired from an article management system described hereinafter.
(3) Scheduling for recording and reproduction of recorded contents based on a recording reservation list generated based on article information, a result of EPG analysis, and time information. The generated schedule is stored in the hard disc device 115 as a broadcast time table in the recording apparatus 100.

A graphic processing controller 109 is a dedicated controller for generating a computer screen according to a drawing command issued from the CPU 111, and has the drawing capability such as that of the SVGA (Super Video Graphic Array) or XGA (extended Graphic Array). The graphic processing controller 109 draws graphics of GUI (Graphical User Interface) or EPG screen for instance.

When reproduced image restored by means of MPEG2 extension processing by the decoder 104 and a computer image generated by the graphic processing controller 109 are superimposed, the composer 108 executes the processing for synthesizing.

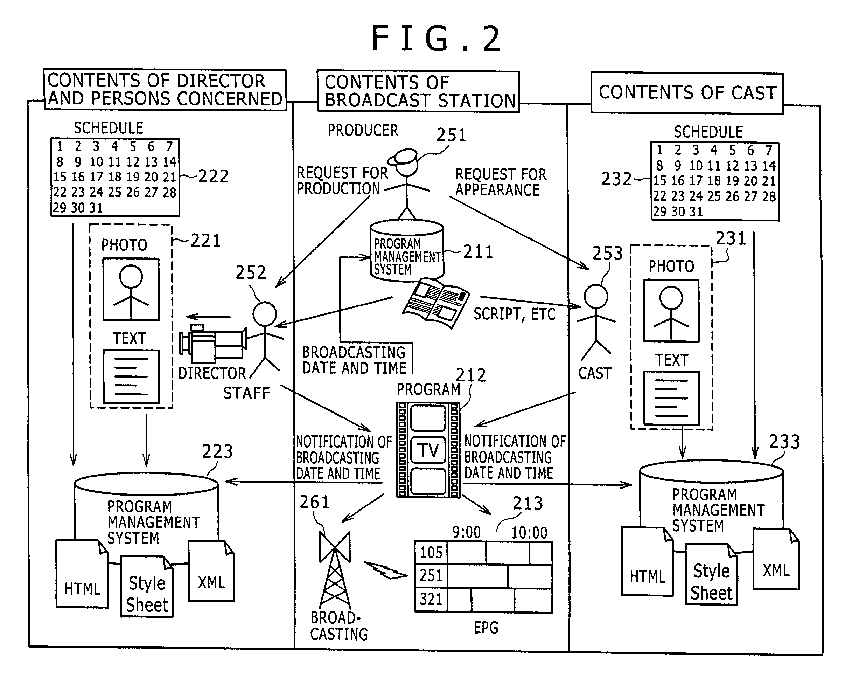

Next, system configuration for a process executed by the recording apparatus according to the present invention, namely for executing a reservation for recording contents with a broadcasting date and time thereof not having been fixed is described below with reference to Fig. 2 and on.

Fig. 2 is an explanatory view illustrating an outline of a process for making broadcast contents, that is, an outline of a process for making a program and configuration for generating, storing and managing data in the process of making contents.

With the recording apparatus according to the present invention, article information concerning contents provided by persons concerned is accumulated, and the accumulated article information is acquired by the user's recording apparatus, a program corresponding to the acquired article information is identified, and a reservation is made for recording the program based on the article information.

As shown in Fig. 2, many people are involved in preparation of a broadcast program. Specifically, they are a director 252 for a broadcast program, persons concerned to the program (staff), and casts, and all of them work under direction by a producer 251 belonging to a broadcast station.

Fig. 2 shows the director 252 as a representative of directors and persons concerned (staff) involved in preparation of a broadcast program and one cast 253, but there may be many directors, other concerned staff and casts depending on contents of a the broadcast program to be prepared, and the following processes are carried out by the directors, other staff, and casts in cooperation.

A broadcast station manages a broadcast program to be broadcasted from the broadcast station by applying a program management system 211. The program management system 211 has a database, and registers each program identifiably with a program identifier (program ID), and manages information concerning a script, a director, casts and the like. The information is provided to persons concerned to the program including as the director 252 and the casts 253.

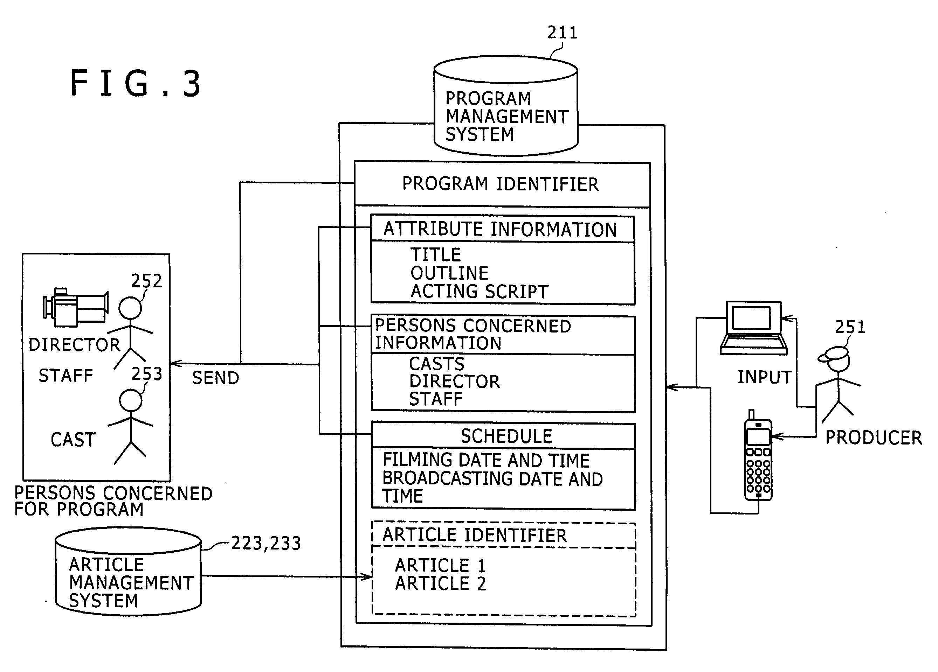

Fig. 3 is a view showing an example of the information managed by the program management system 211. In the database of the program management system 211, a program identifier (program ID) assigned to each program and various types of program managing information for the program identifier (program ID), namely the following information is stored
a) Attribution information: various types of attribution information such as a title, an outline of a program, and a script for the program.
b) Persons concerned information: persons concerned to the program such as casts, a director and staff.
c) Schedule: Date and time for filming and broadcasting, including expected and not fixed.
d) An article identifier: Article identification information generated by persons concerned to the program and registered in the article management system, such as an article 221 prepared by the director 252 and the article 231 made by the cast 253 and registered in the article management system. This article identifier is registered on receiving the information from the article management system.

A program identifier (program ID) is a unique ID assigned to an individual program, and for instance URL including such as identification information of a broadcast station can be used. For instance, URL [http://www.tv.com/program/000001] is assigned to each program as a program identifier (program ID).

As the information corresponding to the program identifier, a) attribute information, b) persons concerned information, c) schedule information are input and registered sequentially. When a photographing date and time and an broadcasting date and time has not been determined, "not determined" is recorded, and when unfixed, the scheduled information may be recorded.

Program information such as these a) attribute information, b) persons concerned information, c) program management information such as schedule information are input and managed at broadcasting station, and offered to persons concerned to a program namely the director 252 or the cast 253 sequentially. As means for offering information, such as data distribution via a network or a recording medium storing the information therein to send by post are applicable.
d) the article identifier is identification information of an article such as an article 221 generated by the director 252 or an article 231 generated by the cast 253. Such articles are generated by persons concerned to a program, and registered in the article management system. The article identifier is registered when the information is notified from the article management system.

The production process for a program and program management data are described in details below. When persons concerned to the program such as the director 252 and the cast 253 receive program management information with a program identifier set therein, generate an article corresponding to the program at an optional timing and register the article in the article management system. For registration, an article identifier is sent to the article management system together with the article.

Fig. 2 shows two article management systems; an article management system 223 having a database storing therein an article 221 generated by the director 252 and an article management system 233 having a database storing therein an article 231 generated by the cast 253. These systems corresponds to a server installed, for instance, at a production office to which the director 252 belongs or at a production office to which the cast 253 belongs.

The article 221 generated by the director 252 or the article 231 generated by the cast 253 includes articles how the production process of a program is going on and photographs and texts describing location information in a case where location for the program is made, and the director 252 or the cast 253 prepares an article from time to time and stores the articles in each article management system 223, 233. The process for storing the data is carried out, for instance, by sending input information with a personal digital assistance to the article management system 223, 233 via a network, or by mailing a recording medium with the data inputted therein to a system administrator, and then the system administrator inputs the data to the article management system 223, 233.

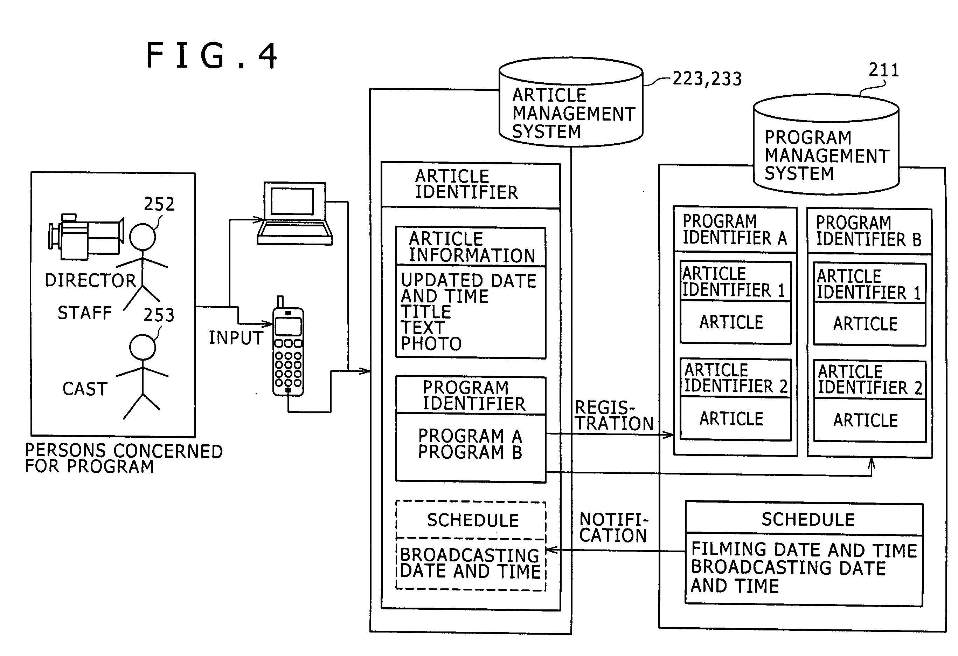

An example of information managed in the article management system 223, 233 is described below with reference to Fig. 4. Databases in the article management system 223, 233 store therein article identifiers set for various articles respectively (article ID) and various types of information for the article identifiers (article ID) respectively including the following types of information:
a) Article information: Various types of article information such as a updating date, a title, a description and a photograph
b) Program identifier: Information on a program identifier corresponding to an article
c) Schedule: After a broadcasting date and time are fixed and registered in a program management system, the schedule is notified from the program management system and registered. Before the broadcasting date and time are fixed, the data for the broadcasting date and time is not stored.

An article identifier (article ID) is a unique ID assigned to each discrete article, and, for instance, a URL may be used for accessing the article management systems 223, 233. For instance, URL [http://www.profile.com/kiji/000001] may be used as an article identifier (article ID).

As the information corresponding to this article identifier, a) article information, b) program identifier are stored and registered. The article information includes descriptions concerning how the production activities are going on, and descriptions of photographs or texts describing and showing location information. The program identifier is the program identifier described above with reference to Fig. 3, and is registered in a program managements system in a broadcast station.

The article management information corresponding to the article identifier illustrated in Fig. 4 shows two program identifiers A and B each as the program identifier b) above. This indicates that the article corresponds to two programs. As illustrated in Fig. 4, an article identifier corresponding to an article newly registered in the article management systems 223, 233 is informed to the program management system 211 from time to time and each article identifier is registered as program management information having an identifier matching and identical to that registered in the program management system 211.

The data format of information registered in the article management system 223, 233 is, for instance, XML, HTML or Style Sheet.

After a broadcasting date and time for a program corresponding to an article are determined and the broadcasting date and time are registered in the program management system 211 as schedule information, the schedule c) is informed from the program management system and recorded.

The article management system 223, 233 informs an article identifier corresponding to an article stored in the article management system to the program management system 211, and the program management system 211 sores the article identifier informed from the article management system 223, 233 in the program management information.

When the broadcasting date and time information from, for example, a producer or other persons concerned in a broadcast station, is input in the program management information, the program management system 211 notifies the broadcasting date and time to the article management system in which the article corresponding to the article identifier registered to the program management system 211 is stored.

General configuration of the program management system 211 is described below. The program management system 211 is a system for storing and managing article information concerning a program to be broadcasted, and has a database with article information and the program identifier recorded as article management information therein in correlation to an article identifier as an identifier of article information relating to a program to be broadcasted.

The program management system 211 further includes a program management system for storing thereon program management information in correlation to a program identifier, a data communication unit for executing communications with the recording apparatus, and a data processing section for receiving the broadcasting date and time information of program corresponding to the article management information stored in the database from the program management system, recording the broadcasting date and time information into the corresponding article management information, and providing the article management information in response to an access request from a recording apparatus to the recording apparatus.

As the article identifier, for instance, a URL may be used, and the data processing section of the program management system 211 provides the article corresponding to the URL to the recording apparatus in response to an access request from the recording apparatus by specifying the URL.

The sequence of program production is further described again with reference to Fig. 2. Under direction and management by a producer 251, a director 252, a cast 253 and other staff work together to complete a program 212, and after a broadcasting date and time for the program are fixed, the broadcasting date and time are recorded in the program management system 211 and informed to each of the article management systems 223, 233 from the program management system 211, and then are recorded as the information registered in the article management system 223, 233 as described above with reference to Fig. 4.

As described with reference to Figs. 3 and 4, the program information managed by referring to a program identifier under the program management system 211 includes an article identifier of a relating article registered therein, and the article management information managed by referring to the article identifier in the article management system 223, 233 includes the program identifier of the relating program registered therein. Namely, because the article information and the program information are set as linked data (associated data), it is possible to specify and acquire a relevant article by referring to the program identifier and also to specify a relevant program according to the article identifier.

The data transmitted between the program management system 211 and the article management system 223, 233 includes either a program identifier or an article identifier set therein, and the program management system 211 or the article management system 223, 233 specifies a destination from which necessary data is obtained or a place for storing data by referring to the identifiers.

As illustrated in Fig. 2, when a broadcasting date and time are fixed, an EPG (electronic program guide) including the broadcasting date and time information is generated, and the generated EPG 213 is provided to a user's recording apparatus. The EPG 213 may be provided with broadcast waves from a broadcast station 261, through a network, or with an information recording medium.

The user's recording apparatus generates a recording reservation list with an article identifier acquired from article management information acquired from the article management system stored therein, and then acquires the broadcasting date and time information from the article management system and adds the information to the recording reservation list after the broadcasting date and time are fixed.

The user's recording apparatus decides the recording schedule base on the broadcasting date and time information set in the recording reservation list.

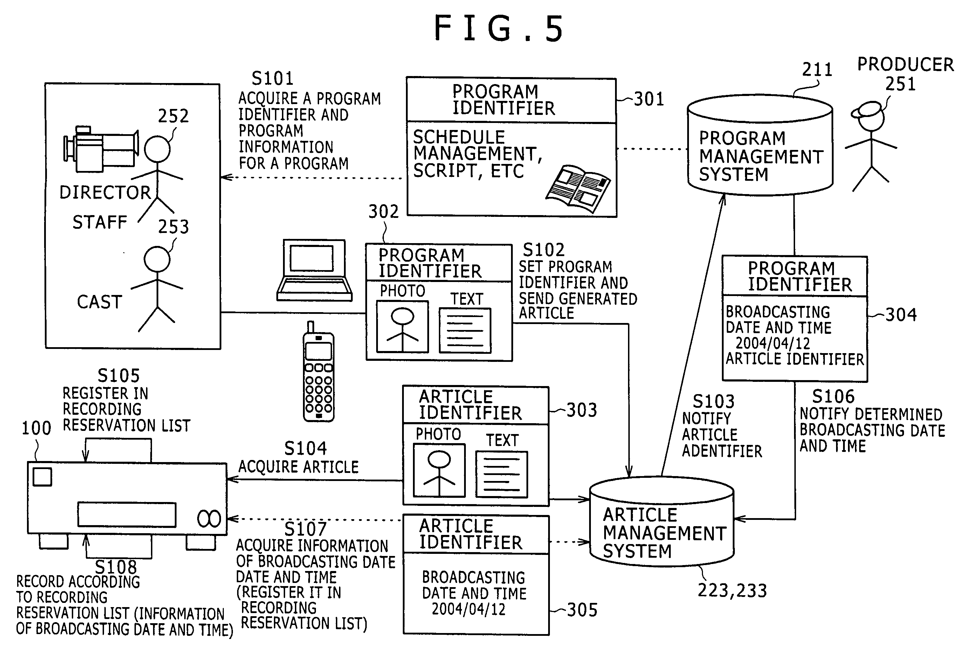

Operations of the user's recording apparatus are described below with reference to Fig. 5 and others. Fig. 5 is a view showing a sequence from the beginning of production of a program to completion of a recording reservation for the program. As illustrated in Fig. 5, the sequence includes steps S101 to S107.

In step S101, the program management information 301 including a program identifier is informed to persons concerned such as the director 252, the cast 253 and other staff based on the program management information managed in the program management system 211 controlled by the producer 251 at a broadcast station and the like.

In step S102, the director 252, cast 253 and other staff generate an article such as a topic concerning the program, and stores article information 302 including combined data consisting of the generated article and the program identifier in the article management system 223, 233. The article management system 223, 233 assigns an article identifier (such as a URL) to each stored article and stores the article identifier in a database thereof.

Fig. 5 shows one article management system, but as described above, different servers may be allocated persons concerned for the program such as each production office to which the cast belongs as the article management system 223, 233.

In step S103, the article management system 223, 233 informs the article identifier to the program management system 211. This operation is executed each time a new article is registered in the article management system 223, 233, or is executed at the fixed intervals. The program management system 211 registers the article identifier informed from the article management system 223, 233 in corresponding program management information. This operation was described above with reference to Fig. 3.

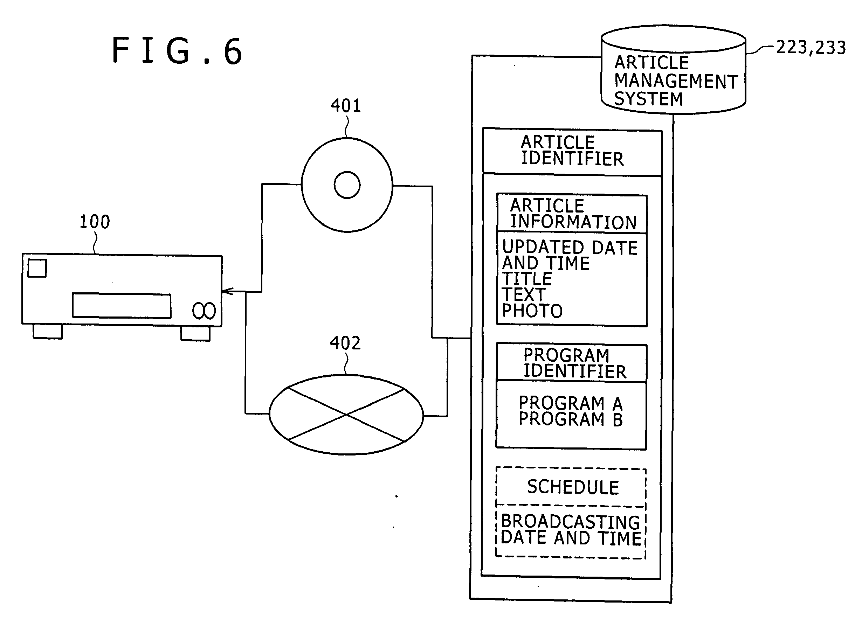

On the other hand, in step S104, the recording apparatus 100 acquires article management information 303 registered in the article management system at a user's side. Various methods as illustrated in Fig. 6, such as an access via a network 402 or via a media 401 stored in and distributed with an information recording medium such as DVD may be employed to acquire the information. When an access via a network is employed, access to various types of articles is possible by designating an URL as an article identifier.

In step S104, the processing for acquiring an article with the recording apparatus 100 may be executed at an optional timing, and a user can confirm contents of article by having the acquired article data displayed on a display. As described before, the article management information registered in the article management system is recorded with a data format such as XML, HTML or Style Sheet, and the user's recording apparatus 100 executes the processing for displaying the data in response to the various data format to display an image, text data and the like included in the article.

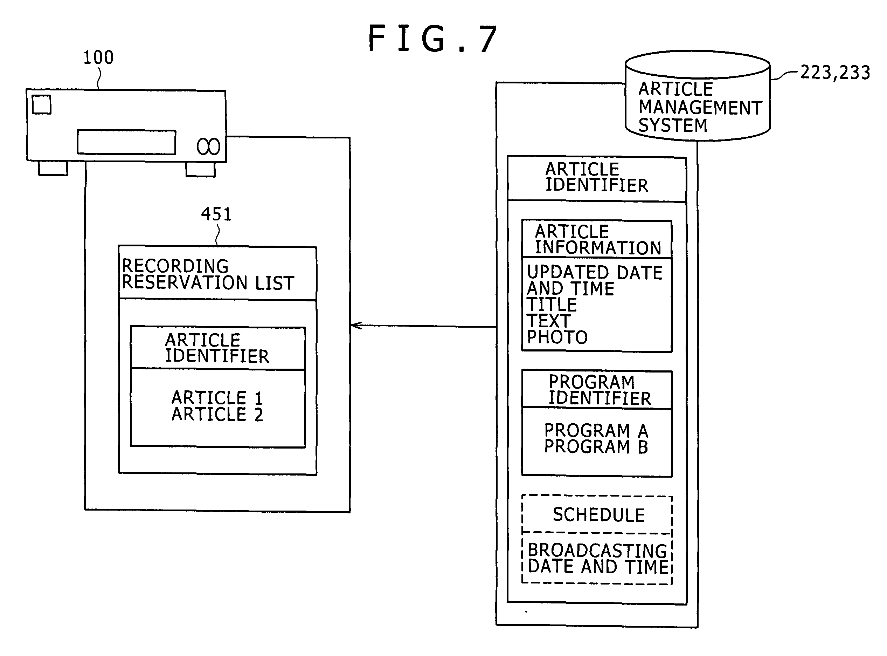

When the user checks the article and decides to record a program relating to the article, the user registers the article identifier in a recording reservation list set in the recording apparatus 100 in step S105 shown in Fig. 5. Configuration of the recording reservation list is shown in Fig. 7.

The recording apparatus 100 generates a recording reservation list 451 as shown in Fig. 7 in a memory section such as a hard disk (HDD) 115 illustrated in Fig. 1, and stores the recording reservation list 451 therein. The recording list 451 stores therein the article identifier assigned to the article in which the user is interested.

The processing for storing the article identifier in the recording reservation list 451 may be carried out by having the article on the display so that the user can visually check it and storing the article identifier according to the user's input. Alternatively, the article identifier may be automatically registered according to the user's preference information previously recorded in the recording apparatus 100. In such automatic registration according to user's preference information, for instance, category information registered as the preference information, category information included in article information with any key word, and words in the texts of the articles are verified to select the articles having higher score of this verification process and then the article identifier of such articles is registered.

Whether the process of storing the article identifier in the recording reservation list 451 is executed in response to an user's input or automatically according to the user's preference information, this process can be executed before the broadcasting date and time of the program relating to the article are fixed.

Then, when the broadcasting date and time of the program for the article are fixed, in the step S106 shown in Fig. 5, the information concerning the broadcasting date and time is stored in the program management information of the program management system 211, and the program management information 304 is sent to the article management system 223, 233. The article management system 223, 233 stores the information concerning the broadcasting date and time in the article management information stored in the article management system 223, 233. This process corresponds to the process previously described with reference to Fig. 4.

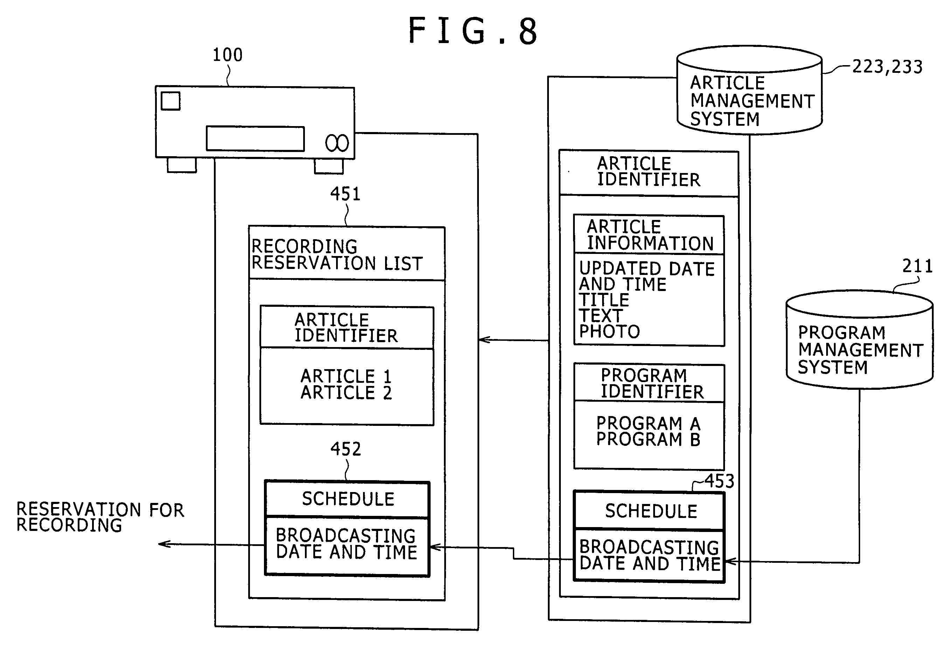

Next, in step S107 in Fig.5, the user's recording apparatus 100 accesses the article management information of the article management system 223, 233, acquires the article management information 305 including the information concerning the broadcasting date and time, and registers the acquired broadcasting date and time information in the recording reservation list previously generated. This process is described below with reference to Fig. 8.

Fig. 8 shows a program management system 211 in which program management information for each program for a program identifier is stored, the article management system 223, 233 managing the article information created by a director, a cast and so on with the correlated article identifier, and the recording apparatus 100 owned by a user. The recording apparatus 100 stores the recording reservation list 451 in a memory section thereof like an HDD.

The recording reservation list 451 stores therein the article identifier of the articled selected based on the user's input or the user's preference information stored in the recording apparatus 100. At a time point when the article identifier is stored, the broadcasting date and time of the program for the article have not been fixed, and the schedule information 452 is not stored in the recording reservation list 451.

When the broadcasting date and time of the program for the article identifier stored in the recording reservation list 451 are fixed, the broadcasting date and time is stored in the program management information of the program management system 211, and is sent to the article management system 223, 233. The article management system 223, 233 stores the schedule information 453 including the broadcasting date and time in the article management information in the article management system 223, 233. This process is equivalent to the process previously described with reference to Fig. 4.

In other words, the article management system 223, 233 sends the data for the article identifier for the article stored in the article management system to the program management system 211, and the program management system 211 stores the data of the article identifier sent from the article management system 223, 233 in the program management information therein. In addition, when the broadcasting date and time information sent, for instance, from a producer of a broadcasting station or other staff in the program management information, the program management system 211 sends the information of the broadcasting date and time to the article management system storing therein the article for the registered article identifier to notify the broadcasting date and time.

In the information concerning the broadcasting date and time sent from the program management system 211 to the article management system 223, 233, either program identifier information or article identifier information is set. The article management system 223, 233 stores the notified broadcasting date and time information in either article management information including a correlated program identifier information or the article management information with the correlating article identifier information set therein based on either one of the information corresponding to the identifier.

Then the user's recording apparatus 100 accesses the article management system 223, 233, acquires the article management information including the schedule information including the information concerning the broadcasting date and time therein, and registers the acquired broadcasting date and time information in the recording reservation list 451 as the schedule information 452 for the program.

In addition, the processing of the recording apparatus 100 for acquiring the schedule information may be carried out as a process for acquiring a new article by accessing the article management system 223, 233, or as a process of the article management system 223, 233 for notifying the schedule.

Alternatively the configuration is allowable in which, when the recording apparatus 100 accesses the article management system 223, 233 for acquiring other article, the article management system 223, 233 sends the information indicating that an updated article including new information concerning the broadcasting date and time set anew is present to the recording apparatus 100 for prompting a user to acquire the article.

Further, the configuration is allowable in which, when the recording apparatus 100 accesses the article management system 223, 233, an operation is automatically executed for checking whether or not there is additional update, on the article management information, of the schedule information including the information of the broadcasting date and time for the article identifier stored in the recording reservation list 451 of the recording apparatus 100. If the article management information of any additional update is found, such information is sent.

After the broadcasting date and time information is stored in the recording reservation list, in the step S108 shown in Fig. 5, the recording apparatus 100 records the program for the article based on the broadcasting date and time information registered in the recording reservation list under control by the CPU and time information received from the internal clock.

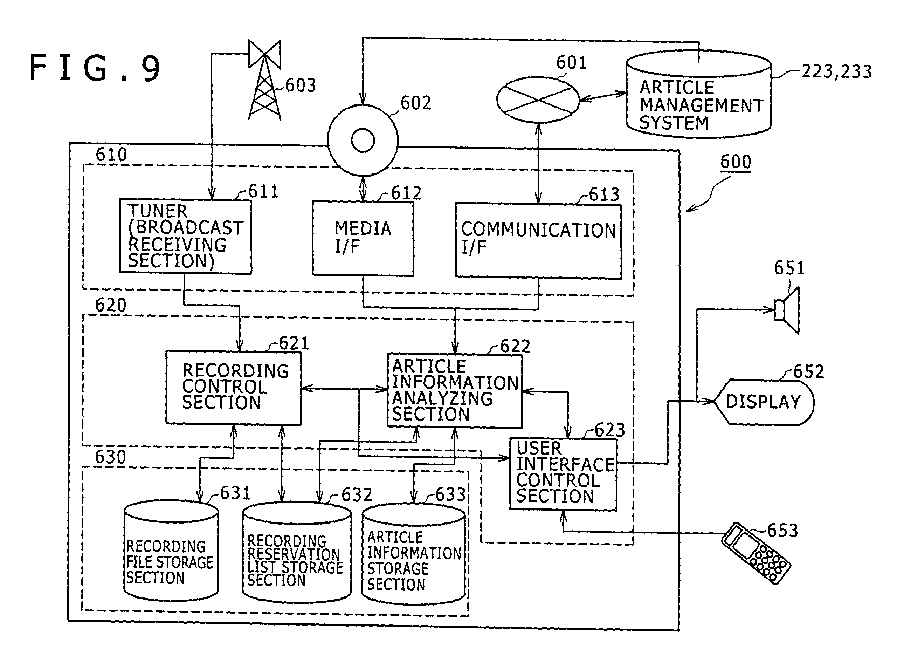

Next, the processes and the functions of the recording apparatus according to the present invention are described with reference to Fig. 9. The hardware configuration of the recording apparatus according to the present invention is the same as that previously described with reference to Fig. 1. Fig. 9 is a view illustrating the processes executed by the recording apparatus focusing on the processes relating to the present invention.

A recording apparatus 600 shown in Fig. 9 includes a date receiving section 610, a date processing section 620, and a data storage area 630. The date receiving section 610 has a turner 611 for receiving a broadcast from each broadcasting station 603, a media interface 612 for receiving data from recording media like a DVD, and a communication interface 613 for communication via a network 601 like the Internet.

The data processing section 620 has a recording controlling section 621, an article information analyzing unit 622, and a user interface controlling section 623. The data processing in the data processing section is performed by specific programs under control by the CPU 111 shown in Fig. 1. The user interface controlling section 623 sends data to the speaker 651 and the display 652 as a data output section and also receives data from the remote control 653 as a data input section.

The data storage area 630 has a recording file storage section 631, a recording prescription list storage section 632, and an article information storage section 633. The components may be equivalent to, for instance, the hard disk 115 as shown in Fig. 1.

As described above, the article management system 223, 233 is a server having a database for storing therein articles created by persons concerned for a program, like a director, a cast and staff, and can be accessed from the user's recording apparatus 600 for acquire the article. The articles may be acquired based on, for instance, a URL as an article identifier.

In the article information analyzing unit 622, a user analyzes, for instance, a date structure of the acquired article management information, and the user outputs the data via a display 652 and a speaker as image and audio information based on the user's operational information received via the user interface controlling section 623. The acquired article information is stored in the article information storing section 633.

When the user checks the article information and wants to record, then the user reserves recording of the contents by specifying the article. With the processing, the article information analyzing unit 622 creates a recording reservation list with the article identifier previously described with reference to Fig. 7 and Fig. 8 stored therein, and then stores the list in the recording reservation list storing section 632 in the data storage area.

Further the article information analyzing unit 622 acquires the article management information with the information concerning the broadcasting date and time set by the article management system 223, 233 as the article management information for an article identifier stored in a recording reservation list storage section 632, and then the article information analyzing unit 622 writes the information concerning the broadcasting date and time in the recording reservation list stored in the recording reservation list storage section 632. This is the process described above with reference to Fig. 8 above.

When the information concerning the broadcasting date and time is registered in the recording reservation list, an article identifier for the information concerning the broadcasting date and time received via the data receiving section 610 is verified to an article identifier registered in the recording reservation list registered in the recording reservation list storage section 632, and when the two article identifiers are identical to each other, the acquired broadcasting date and time information is registered in the recording reservation list.

Then, the recording controlling section 621 records according to the recording reservation list with the broadcasting date and time information set therein in the recording reservation list storage section 632, and creates a recording file including recorded data and stored the file in the recording file storage section 631.

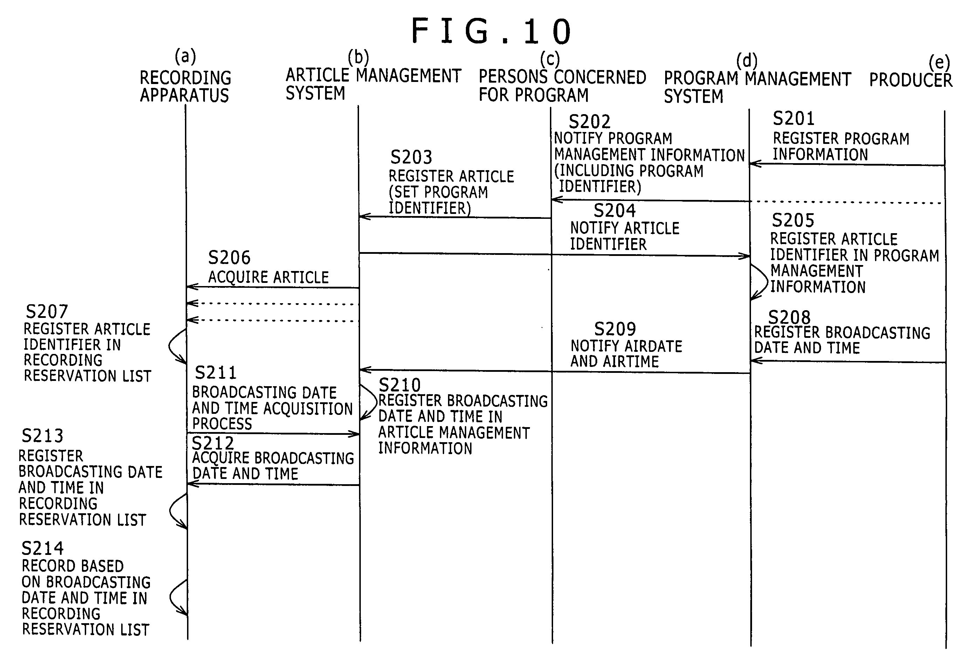

The process sequence from production of a program to completion of an operation for recording the program is described with reference to Fig. 10. Fig. 10 shows processes executed by the following components and persons concerned from the left side:
(a) a recording apparatus owned by a user
(b) an article management system having a database in which persons concerned stores articles
(c) persons concerned for a program including a director, a cast and staff
(d) production management system for storing therein various types of program management information for a program identifier
(e) producer for the program

First, in step S201, a producer registers information for a program to be produced in the program management system. As described above with reference to Fig. 3, this information includes attribute information such as a title of the program and an outline thereof, information of persons involved in production of the program including casts and a director, and schedule information such as filming date and time, broadcasting date and time, and the information is for a program identifier such as a URL thereof. At this point of time, the broadcasting date and time may have not been fixed yet.

Next, in step S202, the program identifier is informed to persons in charge of the program including a director, a cast and staff from the program management system. This information may be sent via a network, or with a medium and the like.

In step S203, articles created by the persons in charge of program, such as a report for shooting at a location and the like are registered in the article management system. During this registration step, the article is registered together with a program identifier, and the article management information including each article and a program identifier for each program is stored in the article management system. The article management information is associated with an article identifier such as a URL thereof. The article manage information has the data structure described above with reference to Fig. 4.

Although Fig. 10 shows only one related person and one article management system, as explained above, there may be many persons in charge of the program including a director, casts and staff. The article management system may be provided in each production office to which each person belongs respectively.

When an article is registered in an article management system in step 203, in the next step S204, an article identifier set in the registered article is sent from the article management system to the program management system. In step S205, the program management system registers the article identifier in the program management information. This is the process previously described with reference to Fig. 4.

In step S206, the user's recording apparatus acquires an article from the article management system. This operation for acquiring an article may be executed at any timing.

In step S207, a user checks the acquired article and registers the article identifier in the recording reservation list to make the program for the article to be recorded. This process is equivalent to the process previously described with reference to Fig. 7. In addition to the configuration in which an article identifier is registered in a recording reservation list in response to a user's explicit operation, another configuration is allowable in which an article for higher user's preference is automatically selected based on the user's preference information stored in the recording apparatus and then the selected article identifier is registered in the recording reservation list.

Next, when the broadcasting date and time are fixed in step S208, the broadcasting date and time information is recorded in the program management information of the program management system by the producer of the broadcasting station or any person in charge of the program.

When the broadcasting date and time information is recorded in the program management information of the program management system, in step S209, the broadcasting date and time information is sent from the program management system to the article management system, and, in step S210, the article management system stores the information broadcasting date and time in the article management information. Further, either a program identifier or an article identifier, or both of these identifiers are set in the broadcasting date and time information sent from the program management system to the article management system, and, in the article management system, corresponding article management information is identified based on the identifiers and the broadcasting date and time information is stored in the article management information. This process corresponds to the process described above with reference to Fig. 8.

Next, in step S211, the recording apparatus accesses the article management system, and, in step S212, the recording apparatus acquires the article with the broadcasting date and time information stored therein from the article management system, and, in step S213, the recording apparatus registers the broadcasting date and time information in the recording reservation list with the corresponding article identifier registered therein. In step 214, the recording is executed according to the image recording reservation list with broadcasting date and time information registered therein.

As described above, with one embodiment of the present invention, it is possible to reserve a program recording by designating various articles for the program that can be acquired even when the broadcasting date and time of the program is not fixed, and a reservation for recording can be made in the early stage without the need of waiting for the issue of an EPG (Electric Program Guide) not sent before the broadcasting date and time are fixed.

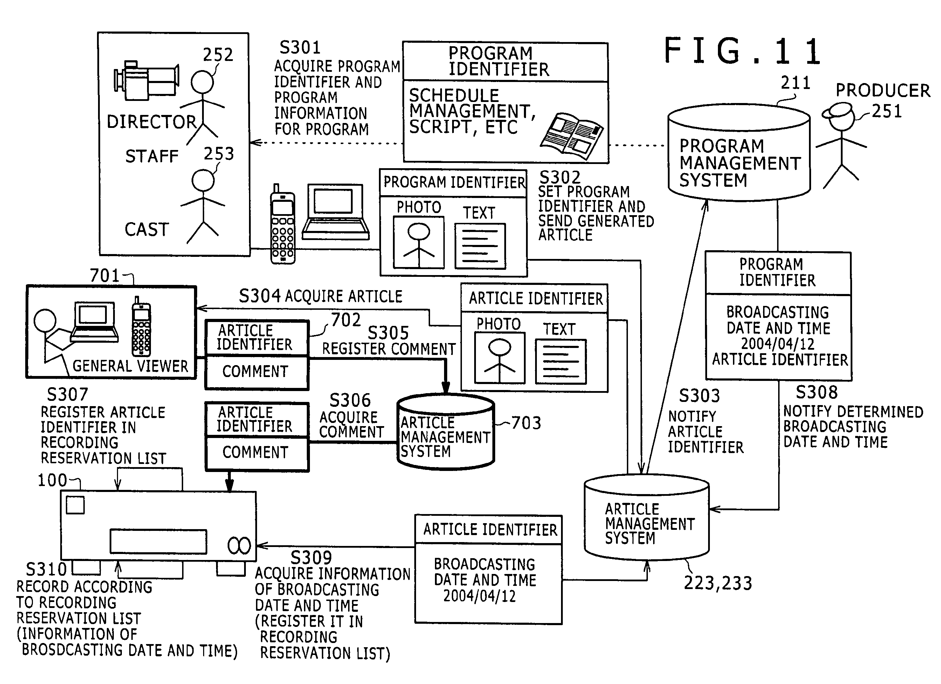

Next, one of the other embodiments of the present invention is described with reference to Fig. 11 to Fig. 13.

At first, an example of configuration in which a reservation for recording can be made based on the comments about an article provided by general viewers and stored in article management systems and the like is described with reference to Fig. 11.

In the example described above, a user's recording apparatus acquires an article created by persons concerned for a program stored in an article management system, and the reservation for recording can be performed based on the acquired article. But one embodiment shown in Fig. 11 is that the reservation for recording can be made based on data such as a comment on the article provided by general viewers who checked the article stored in an article management system.

A process sequence from production of a program up to start of recording is described below with reference to Fig. 11. In Fig. 11, the process proceeds from step S301 to S310 in this order.

In the step S301, program management information including a program identifier is sent to persons concerned for a program such as a director 252, a cast 253 and other staff based on the program management information managed in a program management system 211 managed by a producer 251 of broadcast station etc.

In the step S302, a director 252, a cast 253, and other staff create articles such as topics relating to the program, and combined data of the created article and a program identifier thereof are stored in the article management system 223, 233. In the article management system 223, 233, an article identifier (such as a URL) is registered for each stored article and stored in a database of the article management system 223, 233.

Although Fig. 11 shows only one article management system, as described above, separate servers may be provided for persons concerned for the program, namely for productions to which the casts belong respectively as an article management system 223, 233.

In the step S303, the article identifier is notified from the article management system 223, 233 to the program management system 211. This process is executed each time a new article is registered in the article management system 223, 233 or periodically. In the program management system 211, the article identifier sent from the article management system 223, 233 is registered in the corresponding program management information. This is the process previously described with reference to Fig. 3.

On the other hand, in the step S304, general viewers (user) 701 acquire the information registered in the article management system. To acquire the information, various methods such as, for instance, access via a network or a medium stored in an information recording medium such as a DVD for distribution may be employed. When accessing via a network, it is possible to access various types of articles by designating a URL as an article identifier.

Next, in the step S305, general viewers (user) 701 checks the acquired article, creates a comment and stores the comment data 702 that is a pair of data consisting of the comment and an article identifier in the article management system 703. The article management system 703 may be a server managed by a user or a server managed by a service provider, also may be provided in the same database as that of the article management system 223, 233.

Next, in the step S306, a recording apparatus 100 acquires comment data provided from general viewers from the article management system 703. It is to be noted that the user of the recording apparatus 100 is different from a user who provides the comment. The users providing the comments are general public users.

A user of the recording apparatus 100 can display and check the comments acquired in the step S306. The information registered in the article management system 703 is recorded with the data format such as XML, HTML, and Style Sheet, and the user's recording apparatus 100 can display the data with the data format.

When a user checks a comment and decides to record the program related to the comment, in the step S307 shown in Fig. 11, the article identifier is registered in the recording reservation list registered in the recording apparatus 100. The configuration of the recording reservation list is as described with reference to Fig. 7, and in the recording reservation list, an article identifier of the article that the user has the interest is stored. The article identifier may be stored in the recording reservation list before the broadcasting date and time of the program related to the comment or the article are fixed.

When the broadcasting date and time of the program associated with the article identifier stored in the recording reservation list registered in the recording apparatus 100 are fixed, in the step S308 shown in Fig. 11, the broadcasting date and time information is stored in the program management information of the program management system 211, and the broadcasting date and time information is sent to the article management system 223, 233. The article management system 223, 233 stores the broadcasting date and time information in the article management information stored in the article management system 223, 233. This process is equivalent to the process previously described with reference to Fig. 4.

Next, in the step S309 shown in Fig. 11, the user's recording apparatus 100 accesses the article management information stored in the article management system 223, 233 to acquire the broadcasting date and time information, and registers the acquired broadcasting date and time information in the recording reservation list previously prepared. This process is the same process as that described with reference to Fig. 8.

Then, the user's recording apparatus 100 registers the acquired broadcasting date and time in the recording reservation list with the article identifier registered therein.

After the broadcasting date and time information is stored in the recording reservation list, in the step S310 shown in Fig. 11, the recording apparatus 100 records the program associated with the article based on the broadcasting date and time information registered in the recording reservation list under the control by the CPU and time information inputted from the internal clock.

In this embodiment, a program is recorded by specifying the program not based on articles provided by persons concerned for but based on the information provided by users such as comments from general viewers, and with this configuration, it is also possible to grasp contents of a program and record the program based on the data provided from more data providers than the persons concerned.

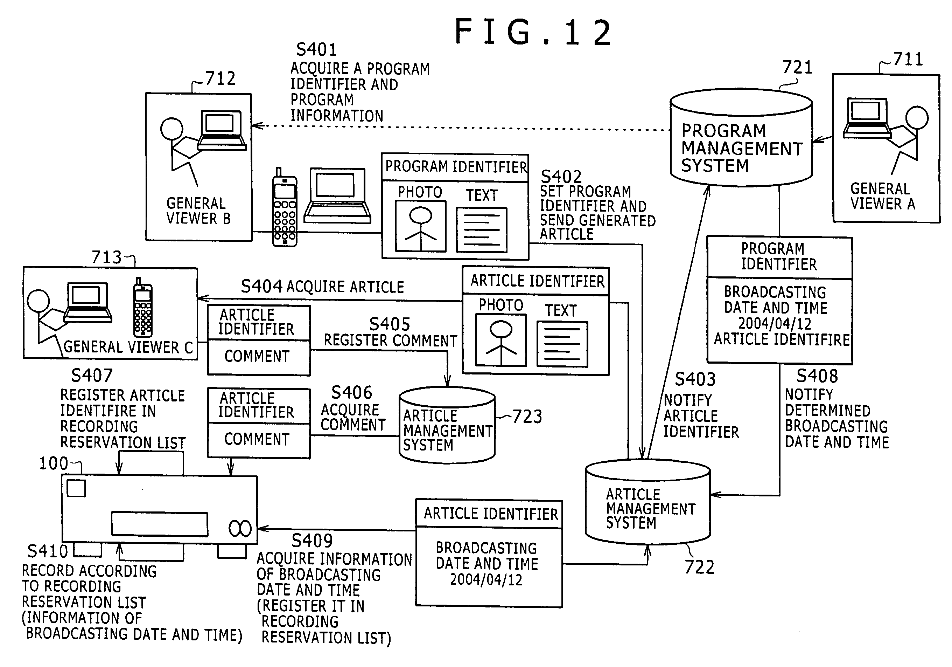

Next, an example in which the entire system is built based on the data provided by general viewers is described with reference to Fig. 12.

In the example described first with reference to Fig. 5, a program management system stores and manages the information provided by a producer of a broadcasting station, and an article management system stores and manages the information provided by a person concerned for the program. But in the system shown in Fig. 12, both the program management system and the article management system are managed based on data provided by general viewers.

A process sequence based on the system configuration shown in Fig. 12 is described below. In Fig. 12, the process sequence progresses from step S401 through step S410.

In step S401, a general viewer B712 accesses a program management system 721 managed by other general viewer A711 as a general user to acquire a program identifier (such as URL) of the program managed by the program management system 721.

In the step S402, the general viewer B712 creates an article as an original content such as a topic relating to the program, and stores the combined data including the created article and the program identifier thereof in the article management system 722. The article management system 722 registers the article identifier (such as URL) for each stored article and stores them in a database of the article management system 722. The article management system 722 may be a server managed by a user or a server managed by a service provider and so on.

Fig. 12 shows only one general viewer B712 and one article management system 722, but the general viewer B712 indicates the general public, and also there may be a number of article management systems.

In the step S403, notification of the article identifier is sent from the article management system 722 to the program management system 721. As is the case described in the example above, when a new article is registered in the article management system 722, the article identifier is sent from the article management system 722, and the article is registered as the program management information of the program associated with the article. This is the same process as that described above with reference to Fig. 3.

In the step S404, a general viewer C713 acquires information registered in the article management system 722. In the step S405, the general viewer C713 checks the acquired article, creates a comment and stores combined data including the comment and the article identifier in an article management system 723. The article management system 723 may be a server managed by a user, or a server managed by a service provider, and also may be in the same database as that of the article management system 722. The article management system 723 stores comments from general viewers with a correlated article identifier.

Next, in the step S406, a recording apparatus 100 acquires the comment of general viewer C713 from article management system 723. It is to be noted that a user of the recording apparatus 100 is different from the general viewers A to C.

The user of the recording apparatus 100 may have the comments acquired in the step S406 displayed on a display to check the contents of the comments. The information registered in the article management system 723 are recorded with the data format such as XML, HTML and Style Sheet, and the recording apparatus 100 displays the data with the corresponding data format.

When the user of the recording apparatus100 checks the comments and the user determines that a program relating to the comments is to be recorded, the user registers an article identifier in the recording reservation list set in the recording apparatus 100. Configuration of the recording reservation list is the same as that described above with reference to Fig. 7, and in the recording reservation list, an article identifier of the article that the user has an interest is stored. The article identifier may be stored in the recording reservation list before the broadcasting date and time of the program related to the comments or articles are fixed.

Then, when the broadcasting date and time of the program associated with the article identifier stored in a the recording reservation list registered in a recording apparatus 100 are fixed, a general viewer A511 stores the information concerning the broadcasting date and time in the program management information of the program management system 721, and, in the step S408 shown in Fig. 12, the broadcasting date and time information is sent to an article management system 722. The article management system 722 stores the broadcasting date and time information in the article management information stored in the article management system 722. This process is equivalent to that described above with reference to Fig. 4.

Next, in the step S409 shown in Fig. 12, the user's recording apparatus 100 accesses the article management information of the article management system 722 to acquire the broadcasting date and time information, and registers the acquired broadcasting date and time information in the recording reservation list previously created. This process is equivalent to that described above with reference to Fig. 8.

Then, the user's recording apparatus 100 registers the acquired broadcasting date and time information in the recording reservation list with the article identifier acquired therein.

After the broadcasting date and time is stored in the recording reservation list, in the step S410 shown in Fig. 12, the recording apparatus 100 records the program associated with the article based on the broadcasting date and time information registered in the recording reservation list under control by the CPU and the time information received from the internal clock therein.

In this example, general viewers manage the program management system itself, and in this case system management independent of the management of a program producer like broadcasting station becomes possible.

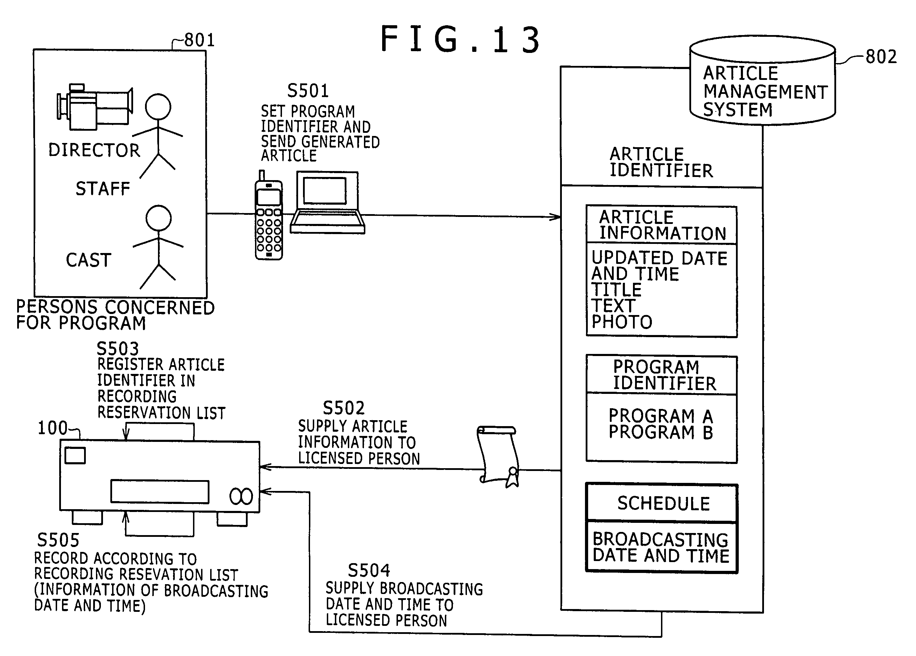

Next, a configuration in which an article managed by an article management system is allowed to check and use based on the license is described with reference to Fig. 13.

In the step S501, articles provided by persons concerned to a program 801 are stored in an article management system 802. It is to be noted that the data stored in the article management system 802 is the same type as that of the data described above in relation to the examples.

In the step S502, the article stored in the article management system 802 is read, but in this example, the article is provided under the licensing system. For instance, the article can be provided only when a recording apparatus accesses an article management system 802 via a network and then the user registration is made or service charge is paid. The article may be supplied the licensing system including the conditions, for instance, that a user is a member of a particular organization.

Further, an article may be acquired not only via a network but also via a medium like a DVD. In such a case, it is possible to grant a license for a certain period based on some conditions including the purchase of the DVD, and if the DVD is provided as the attachment of a magazine, a license for a certain period based on a condition including the purchase of the magazine can be set.

A user who could acquire an article based on such license may check and read the article. When a reservation for recording is to be made, in the step S503 shown in Fig. 13, an article identifier is registered in a recording reservation list registered in the recording apparatus 100. An article identifier of an article that the user has the interest is stored in the recording reservation list.

Then, when the broadcasting date and time of the program associated with the article identifier stored in the recording reservation list registered in the recording apparatus 100 are fixed, in the step S504, the recording apparatus 100 acquires the broadcasting date and time information based on a license from the article management system 802, and registers the acquired broadcasting date and time information in the recording reservation list previously created. This process is the same process as that described above with reference to Fig. 8.

Then, the user's recording apparatus 100 registers the acquired broadcasting date and time in the recording reservation list with the article identifier registered therein. After the broadcasting date and time are stored in the recording reservation list, in the step S505 in Fig. 13, the recording apparatus 100 records a program associated with the article based on the broadcasting date and time information registered in the recording reservation list.

This example is based on the configuration in which only licensed persons can check and read an article managed by an article management system, and with this configuration, user management becomes possible through registration of users when the license is given to users as general viewers, which provides such as promotion of users' eagerness for purchasing DVDs and magazines.

The present invention was described above in details with reference to specific examples thereof. However, it should be understood by those skilled in the art that various modifications, combinations, subcombinations and alterations may occur depending on design requirements and other factors insofar as they are within the scope of the appended claims or the equivalents thereof. The present invention is disclosed by providing some examples, and should not be understood that present invention is limited to the examples described above. To determine a gist of the present invention, claims attached hereto below should be referred to. For instance, in the examples described above, articles provided by persons concerned for a program or information provided by general viewers are supplied as article information, but the present invention is not limited to this configuration, and also the configuration is allowable in which comments of a program by magazine reports not having direct connection with the program are supplied as article information.

The sequence of processes described in this specification may be performed by hardware or software, or with a combination of hardware and software. To carry out the processes by software, a program with the process sequence recorded therein may be installed in a memory of a computer built in dedicated hardware or in a general-purpose computer capable of executing various types of processes.

For instance, a program may previously be recorded in a hard disk or a ROM (Read Only Memory) as a recording medium. Alternatively, the program may be stored (recorded) temporarily or permanently in a removable recording medium such as a flexible disk, a CD-ROM (Compact Disc Read Only Memory), a magnetic disk, and a semiconductor memory. Such removable recording medium may be provided as so-called package software.

The program may be installed from the removable recording medium as described above to a computer. In addition, the program is transferred without wires from a download site to a computer or is transferred over a wire line through a network such as a LAN (Local Area Network) or the Internet to a computer, and in the case the computer receives the program transferred as described above and install the program in a recording medium such as a hard disk incorporated therein.

Various types of processes described in this specification are not only executed in a time series following the descriptions in the specification, but may be executed concurrently or discretely according to the processing capability or a device executing the processes or according to the necessity. A system as used herein indicates configuration based on a logical collection of a plurality of devices, and the component devices are not always required to be provided in the same frame.

While preferred embodiments of the invention have been described using specific terms, such description is for illustrative purposes only, and it is to be understood that changes and variations may be made without departing from the spirit of scope of the following claims.

## Claims

1. A recording apparatus for recording a broadcast program to be received comprising:
data input means for acquiring article information concerning a broadcast program and with an article identifier set to the information;
article information analyzing means for generating a recording reservation list with an article identifier for said article information set as registered information, storing the recording reservation list in a storage unit, inputting a broadcasting date and time information related to an article identifier set in said recording reservation list into said data input means, and registering the acquired broadcasting date and time information stored in said storage unit; and
recording control means for executing recording based on the broadcasting date and time information set in the recording reservation list stored in said storage unit.

2. The recording apparatus according to claim 1,
wherein said article information analyzing means verifies an article identifier related to said received broadcasting date and time information with an article identifier registered in the recording reservation list stored in said storage unit, and registers the broadcasting date and time information in said recording reservation list when the two identifiers are identical to each other.

3. The recording apparatus according to claim 1 or 2,
wherein said article information analyzing means generates a recording reservation list with an article identifier corresponding to an article selected based on user input information as registered information and stored said recording reservation list in the storage unit.

4. The recording apparatus according to anyone of claims 1 to 3,
wherein said article information analyzing means generates a recording reservation list with the article identifier corresponding to an article selected based on user's preference information stored in the storage unit as registered information, and stores the recording reservation list in said storage unit.

5. The recording apparatus according to anyone of claims 1 to 4,
wherein said article information is either an article provided by a person concerned for a broadcast program or information provided by a general viewer, and
said article information analyzing means generates the recording reservation list with the article identifier related to the article provided by the person concerned for the broadcast program or information provided by the general viewer stored as registered information, and stores the recording reservation list in the storage unit.

6. A recording reservation system comprising:
a program management system having stored program management information related to a program identifier to be broadcasted;
an article management system having stored article information, which corresponds to a program identifiable with said program identifier, related to an article identifier; and
a recording apparatus capable of selecting an object to be recorded based on article information acquired from said article management system, generating a recording reservation list with said article identifier set and generating the recording reservation in a storage unit, acquiring broadcasting date and time information for a program corresponding to an article corresponding to an article identifier registered in said recording reservation list, additionally writing the broadcasting date and time information in said recording reservation list, and recording based on the broadcasting date and time information set in said recording reservation list.

7. The recording reservation system according to claim 6,
wherein said broadcasting date and time information is sent from said program management system to said article management system, and further from said article management system to said recording apparatus.

8. The recording reservation system according to claim 6 or 7,
wherein said recording reservation system stores the article information and said program identifier related to said article identifier.

9. The recording reservation system according to anyone of claims 1 to 8,
wherein said article management system notifies said program management system of an article identifier corresponding to an article stored in said article management system, and
said program management system stores the article identifier notified from said article management system in said program management information, and when the broadcasting date and time information is inputted in said program management information, said program management system notifies the article management system, which stores the article corresponding to the registered article identifier, of the broadcasting date and time information.

10. The recording reservation system according to anyone of claims 1 to 9,
wherein said article management system stores article management information including corresponding program identifier information or the broadcasting date and time information notified with the article management information, which is set the corresponding article identifier information, based on either program identifier information appended to the broadcasting date and time information notified from said program management system or the article identifier information.

11. The recording reservation system according to anyone of claims 1 to 10,
wherein said article management system executes a process for presenting an article under a licensing system.

12. A article information management system for storing and managing article information relating to a program to be broadcasted comprising:
a database recorded article information and a program identifier related to an article identifier as an identifier for article information relating to a program to be broadcasted as article management information;
data communication means for executing data communication with a program management system with program management information related to a program identifier stored and a recording apparatus;
data processing means for receiving broadcasting date and time information for a program corresponding to article management information stored in said database from said program management system, recording the broadcasting date and time information in corresponding article management information, and presenting said article management information to said recording apparatus in response to a request for access from said recording apparatus.

13. The article information management system according to claim 11,
wherein said article identifier is an URL, and
said data processing means present an article corresponding to the URL in response to a request for access by specifying the URL from said recording apparatus.

14. A recording method of recording a broadcast program to be received comprising the steps of:
inputting data for acquiring article information relating to the broadcast program to be received and with an article identifier set to the information;
analyzing the article information for generating a recording reservation list with an article identifier for said article information set as registered information, storing the recording reservation list in a storage unit, inputting broadcasting date and time information related to the article identifier set in said recording reservation list, and registering the acquiring broadcasting date and time information on the recording reservation list stored in said storage unit; and
recording based on the broadcasting date and time information set in the recording reservation list stored in said storage unit.

15. The recording method according to claim 14,
wherein said article information analyzing step includes the steps of:
verifying the article identifier related to said inputted broadcasting date and time information to the article identifier registered in the recording reservation list stored in said storage unit, and registering the broadcasting date and time information in said recording reservation list when the two identifiers are identical to each other.

16. The recording method according to claim 14 or 15,
said article information analyzing step includes the step of:
generating the recording reservation list with an article identifier corresponding to an article selected based on user input information as registered information and storing the recording reservation list in the storage unit.

17. The recording method according to anyone of claims 1 to 16,
said article information analyzing step includes the step of:
generating the recording reservation list with the article identifier corresponding to an article selected based on user's preference information stored in the storage unit as registered information and storing the recording reservation list in the storage unit.

18. The recording method according to anyone of claims 1 to 17,
wherein said article information is either an article provided by a person concerned for a broadcast program or information provided by a general viewer, and
said article information analyzing step includes the step of generating the recording reservation list with the article identifier related to the article provided by the person concerned for the broadcast program or information provided by the general viewer stored as registered information and storing the recording reservation list in the storage unit.

19. A computer program for making a computer executing the method of recording a broadcast program to be received, said method comprising the step of:
inputting data for acquiring article information relating to the broadcast program to be received and with an article identifier set to the information;
analyzing the article information for generating a recording reservation list with an article identifier for said article information set as registered information, storing the recording reservation list in a storage unit inputting broadcasting date and time information related to the article identifier set in said recording reservation list, and registering the acquiring broadcasting date and time information on the recording reservation list stored in said storage unit; and
recording based on the broadcasting date and time information set in the recording reservation list stored in said storage unit.

20. A recording apparatus for recording a broadcast program to be received comprising:
a data input device for acquiring article information relating to a broadcast program and with an article identifier set to the information;
an article information analyzing device for generating a recording reservation list with an article identifier for said article information set as registered information, storing the recording reservation list in a storage device, inputting the broadcasting date and time information related to the article identifier set in said recording reservation list into said data input device, and registering the acquired broadcasting date and time information in the recording reservation list stored in said storage device; and
a recording control device for executing recording based on the broadcasting date and time information set in the recording reservation list stored in said storage device.
